# EUROPEAN PATENT SPECIFICATION

(11) **EP 0 984 153 B1**
(45) Date of publication and mention of the grant of the patent: **19.03.2003**
(21) Application number: 99116775.0
(22) Date of filing: 31.08.1999
(51) Int. Cl.: F02M 25/07, F02D 43/00, F02D 21/08, F02B 37/18, F02B 37/24

(54) **Control system for turbocharged engine**
Kontrollsystem für turbogeladene Verbrennungsmotoren
Systeme de command pour moteur à combustion turbocompressé

(30) Priority: 01.09.1998 JP 24759898
(43) Date of publication of application: 08.03.2000
(73) Proprietor: Mazda Motor Corporation, Aki-gun, Hiroshima 730-8670 (JP)
(72) Inventor: Saito, Tomoaki, Aki-gun, Hiroshima (JP); Yasutomi, Katsuaki, Aki-gun, Hiroshima (JP); Hosoya, Hideki, Aki-gun, Hiroshima (JP); Araki, Keiji, Aki-gun, Hiroshima (JP)
(74) Representative: Müller-Boré & Partner Patentanwälte

(56) References cited:
- EP-A- 0 323 754
- EP-A- 0 802 312
- DE-A- 4 214 648
- PATENT ABSTRACTS OF JAPAN vol. 1998, no. 08, 30 June 1998 (1998-06-30) & JP 10 061503 A (HINO MOTORS LTD), 3 March 1998 (1998-03-03)

## Description

The present invention relates to a control system for an engine equipped with a turbocharger for automotive vehicle.

Typically, in exhaust gas recirculation systems for a diesel engine which comprises an exhaust gas recirculation (EGR) valve operative to regulate the amount of exhaust gas that is recirculated into an intake passage through an exhaust gas recirculation (EGR) passage and an actuator operative to drive the exhaust gas recirculation valve, in order for such an exhaust gas recirculation system to reduce particulate such as smoke and unburnt fuel in the exhaust gas, it is popular to control the actuator so as to remove a deviation between a target excess air ratio and an actual excess air ratio. In this kind of exhaust gas recirculation system which is described in, for example, Japanese Unexamined Patent Publication No. 8 - 144867, an actual excess air ratio, which is known from an air-to-fuel ratio detected by a linear air-to-fuel ratio sensor such as an oxygen (O₂) sensor in an exhaust passage, is lowered by opening the exhaust gas recirculation valve so as to increase the amount of exhaust gas that is recirculated when it becomes greater beyond a target excess air ratio which is determined according to engine operating conditions or risen by closing the exhaust gas recirculation valve so as to decrease the amount of exhaust gas that is recirculated or to cut off exhaust gas when it becomes smaller beyond the target excess air ratio. This exhaust gas recirculation system provides a reduction in NOx emission in the exhaust gas without being accompanied by generation of smoke due to an excess of exhaust gas recirculation.

In turbocharged engines which are designed and adapted to vary turbine efficiency of the turbocharger by varying a nozzle angle of variable turbine nozzle on which a cross section of an exhaust gas stream, there is aggravation of the controllability of exhaust gas recirculation due to fluctuations of a pressure difference between pressure before and after the exhaust gas recirculation valve, which is because the exhaust gas recirculation valve is feedback controlled so as to remove a deviation between a target excess air ratio and an actual excess air ratio. That is, because aggravation of fuel economy is caused in the case where the supercharging pressure is higher as compared with a target value determined correspondingly to an engine operating condition by reason of a supercharging capacity of the turbocharger which is higher than necessity and high energy of the exhaust gas while the engine operates in a range of high loads and high speeds, the feedback control is performed to lower the turbine efficiency by, for example, increasing a turbine nozzle area so as thereby to lower the supercharging pressure. Further, when the actual excess air ratio is off from the target excess air ratio due to a reduction in the amount of flesh intake air which results from execution of the control of supercharging pressure, the amount of smoke is increased, which leads, in the case of diesel engine, to an increase in particulate in the exhaust gas. In order to prevent an increase in the amount of smoke due to execution of the control of supercharging pressure, control is performed to increase the amount of flesh intake air by changing an opening or lift of the exhaust gas recirculation valve. However, this control rises the turbine efficiency with an effect of inducing a tendency to boost the charging pressure. Therefore, if a change rate of turbine efficiency is varied too fast during the turbine efficiency variable control, the amount of exhaust gas recirculation will hunt and make it hard to perform proper variable control of the turbine efficiency. In particular, in a state where the exhaust gas recirculation valve opening or lift is small and a pressure difference between pressure before and after the Exhaust gas recirculation valve is large in consequence, a significant change in the amount of exhaust gas that is recirculated is caused even though a small change in Exhaust gas recirculation valve opening or lift, as a result of which the Exhaust gas recirculation valve will cause hunting or overshooting, so that it is hard to make the turbine efficiency coincident with a target value.

The present invention has an object thereof to provide a control system for a turbocharged engine which perform turbine efficiency for improving fuel economy and feedback control of an exhaust gas recirculation valve for reducing particulate such as smoke and unburnt fuel and NOx emissions in exhaust gases without causing overshooting and/or hunting.

According to the invention a control system for a turbocharged engine which is equipped with exhaust gas recirculation control means for detecting a value relating to an actual excess air ratio and feedback controlling an exhaust gas recirculation valve so as to bring the actual excess air ratio into coincidence with a target excess air ratio and turbine efficiency control means for controlling a turbocharger to change turbine efficiency of the turbocharger, is characterized by detection means for detecting a value relating to a pressure difference between pressure before and after the exhaust gas recirculation valve and control means for controlling the turbine efficiency control means to vary a change rate at which the turbine efficiency changes so as to become lower as the pressure difference rises. With the turbocharged engine control system of the invention, a change rate of turbine efficiency is varied according to pressure differences between pressure before and after the exhaust gas recirculation valve. Accordingly, in an engine operating state wherein the amount of exhaust gas that is recirculated significantly changes even when the pressure difference is great and a valve lift of the exhaust gas recirculation valve slightly changes, a rapid change in supercharging pressure corresponding to a change in turbine efficiency is restricted with an effect of preventing an occurrence of a significant change in the amount of exhaust gas that is recirculate into an intake passage.

According to a turbocharged engine control system of another preferred embodiment, the turbine efficiency control means changes the turbine efficiency by changing a nozzle angle of a variable turbine nozzle upon which an exhaust gas flow area of a turbine of the turbocharger depends such that a change rate at which the nozzle angle changes becomes lower as the pressure difference rises. With the turbocharged engine control system, in an engine operating state wherein the amount of exhaust gas that is recirculated significantly changes even when the pressure difference is great and a valve lift of the exhaust gas recirculation valve slightly changes, a nozzle angle of the variable turbine nozzle is slowly varied, so that a rapid change in supercharging pressure following a change in turbine efficiency is restricted with an effect of preventing an occurrence of a significant change in the amount of exhaust gas that is recirculate into an intake passage.

According to a turbocharged engine control system of a third preferred embodiment, the turbine efficiency control means includes a waste-gate valve which is disposed in a passage through which an exhaust gas flows bypassing a turbine of the turbocharger and controls operation of the waste-gate valve to change the turbine efficiency of the turbine such that a change rate at which the waste-gate valve operates becomes lower as the pressure difference rises. With the turbocharged engine control system, in an engine operating state wherein the amount of exhaust gas that is recirculated significantly changes even when the pressure difference is great and a valve lift of the exhaust gas recirculation valve slightly changes, the waste-gate valve is slowly operated, so that a rapid change in supercharging pressure following a change in turbine efficiency is restricted with an effect of preventing an occurrence of a significant change in the amount of exhaust gas that is recirculate into an intake passage.

According to a turbocharged engine control system of a fourth preferred embodiment, the detection means comprises a pressure sensor operative to detect intake air pressure of intake air introduced into an intake passage as the value relating to the pressure difference between pressure before and after the exhaust gas recirculation valve and the turbine efficiency control means controls the turbocharger to change the turbine efficiency at a change rate which is made lower as the intake air pressure rises. With the turbocharged engine control system, in an engine operating state wherein it is assessed that the pressure difference is great due to high intake air pressure, the control is performed to lower a change rate of turbine efficiency with an effect of preventing an occurrence of a significant change in the amount of exhaust gas that is recirculate into an intake passage.

According to a turbocharged engine control system of a fifth preferred embodiment, the turbine efficiency control means controls the turbocharger to change the turbine efficiency at a change rate which is made small while the turbocharged engine operates at high speeds and high loads. With the turbocharged engine control system, since there is a tendency that the actual amount of intake air rapidly change even when a valve lift of the exhaust gas recirculation valve slightly changes due to a great change in pressure difference between pressure before and after the exhaust gas recirculation valve in a range of higher engine speeds and higher engine loads wherein a large amount of exhaust gas is generated, the control is performed to lower a change rate of turbine efficiency with an effect of preventing an occurrence of a significant change in the amount of exhaust gas that is recirculate into an intake passage.

According to a turbocharged engine control system of a sixth preferred embodiment, the turbine efficiency control means controls the turbocharger to change a nozzle angle of a turbine nozzle upon which an exhaust gas flow area of a turbine of the turbocharger depends so as thereby to change turbine efficiency of the turbocharger, the detection means detects intake air pressure of intake air introduced into an intake passage as a value relating to a pressure difference between pressure before and after the exhaust gas recirculation valve and the control means controls a change rate at which the exhaust gas recirculation valve is operated to become lower and a change rate of the actual excess air ratio to become greater when caused by operation of the exhaust gas recirculation valve than when caused by a change in the nozzle angle. With the turbocharged engine control system, the exhaust gas recirculation valve is operated at a change rate of valve lift which is lowered but higher than a change rate of nozzle angle of the turbine of the turbocharger, as a result of which the exhaust gas recirculation valve is prevented from overshooting and/or hunting.

According to a turbocharged engine control system of a seventh preferred embodiment, the turbine efficiency control means varies a change rate at which the turbine efficiency changes to be high at the beginning period of acceleration from a state wherein the turbocharged engine operates in a range of lower speeds and lower loads. With the turbocharged engine control system, the control is performed to lower the change rate of turbine efficiency with an effect of providing reliable responsiveness of acceleration resulting from a rapid effect of supercharging from a state wherein exhaust energy is low.

According to a turbocharged engine control system of another preferred embodiment, the turbine efficiency control means varies the change rate to be high during an early stage of acceleration since an accelerator pedal is in its fully released position. With the turbocharged engine control system, when acceleration is made from a state wherein exhaust energy is low at a fully closed or released position of the accelerator pedal during a gear shift or a state wherein the engine is idling, the control is performed to rise the change rate of turbine efficiency at the beginning of acceleration with an effect of providing reliable responsiveness of acceleration resulting from a rapid effect of supercharging and, in particular, of improving acceleration in a state wherein there is a demand for high responsiveness of acceleration.

According to a turbocharged engine control system of still another preferred embodiment, the turbocharged engine control system comprises an exhaust gas recirculation passage extending from an exhaust passage upstream from the turbine of the turbocharger, wherein the exhaust gas recirculation control means feedback controls a valve lift of the exhaust gas recirculation valve so as to bring the actual excess air ratio into coincidence with the target excess air ratio. With the turbocharged engine control system, when both control for changing turbine efficiency and feedback control for controlling the exhaust gas recirculation valve so as to bring an actual excess air ratio into coincidence with a target excess air ratio are performed, the change rate of turbine efficiency is lowered in a state wherein a pressure difference between pressure before and after the exhaust gas recirculation valve is great with an effect of preventing an occurrence of a rapid change in the amount of exhaust gas that is recirculated which is accompanied by a rapid change in turbine efficiency of the turbine of the turbocharger.

The above and other objects and features of the present invention will be clearly understood from the following detailed description with respect to preferred embodiments thereof when considered in conjunction with the accompanying drawings, in which:
Figure 1 is a schematic view showing a control system of the invention for a diesel engine equipped with a turbocharger;
Figure 2 is a block diagram showing the diesel engine control system;
Figure 3 is a block diagram showing a structure of exhaust gas recirculation control means;
Figure 4 is an illustration showing a map of change rate basic coefficient;
Figure 5 is an illustration showing a map of pressure difference coefficient;
Figure 6 is a flow chart illustrating a general sequence routine of control for a diesel engine equipped with a turbocharger;
Figure 7 is a flow chart illustrating a sequence routine of calculation of a feedback control value;
Figure 8 is a flow chart illustrating a sequence routine of calculation of a change rate coefficient;
Figure 9 is a diagram showing the relationship between intake air pressure and pressure difference;
Figure 10 is an illustration showing a map of intake air pressure coefficient;
Figure 11 is a flow chart illustrating a variation of the sequence routine of calculation of a change rate coefficient shown in Figure 8;
Figure 12 is an illustration showing a map of first change rate basic coefficient;
Figure 13 is an illustration showing a map of second change rate basic coefficient;
Figure 14 is an illustration showing a map of intake air pressure coefficient;
Figure 15 is a diagram showing the relationship of a change in the amount of intake air with respect to exhaust gas recirculation valve lift; and
Figure 16 is a diagram showing the relationship of a change rate of the amount of intake air with respect to exhaust gas recirculation valve lift.

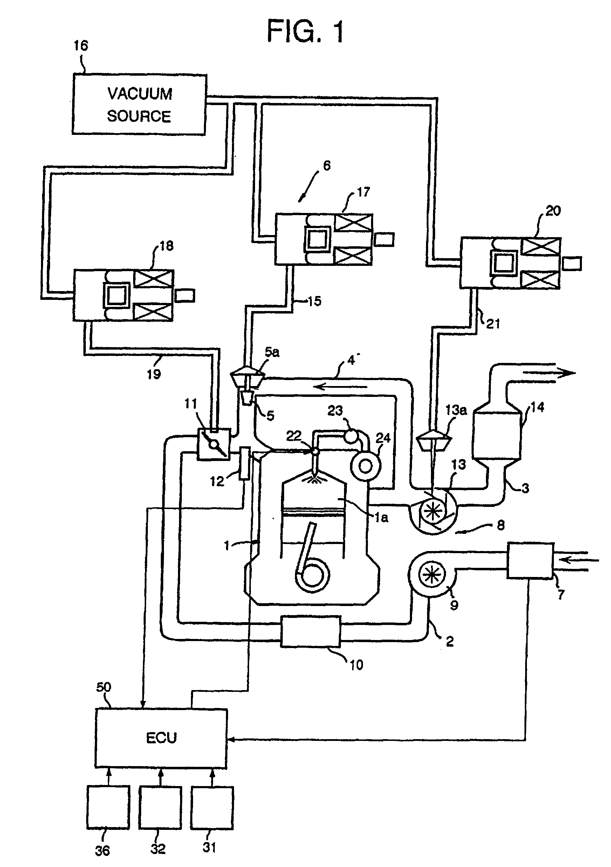

Referring to the drawings in detail and, more particularly, to Figure 1 which shows an overall structure of an control system according to an embodiment of the invention which is applied to a turbocharged diesel engine, the control system includes an intake air passage 2 and an exhaust passage 3 which are connected to a turbocharged diesel engine 1, and a diaphragm type of exhaust gas recirculation (EGR) valve 5 which is actuated by an exhaust gas recirculation valve actuator 5a to admit exhaust gas into the intake air passage 2 from the exhaust passage 3 through an exhaust gas recirculation (EGR) passage 4. The turbocharged diesel engine 1 is equipped with a common-rail 23 connected between fuel injectors 22 (only one of which is shown) and a fuel pump 24. The intake air passage 2 is equipped in order from the upstream side with an air flow sensor 7, a blower 9 of a variable geometry turbocharger (VGT) 8, an intercooler 10, an intake valve 11 and a pressure sensor 12. The exhaust passage 3 is equipped in order from the upstream side with a turbine 13 of the turbocharger 8 and a catalytic converter 14. The variable geometry turbocharger 8 has the turbine 13 whose nozzle angle is variable so as to vary an exhaust gas flow area with an effect of varying turbine efficiency. The exhaust gas recirculation passage 4 is connected between an intake manifold of the intake air passage 2 and the exhaust passage 3 upstream from the turbine 13. Exhaust gas is introduced into the exhaust gas recirculation passage 4 from the exhaust passage 3 and admitted into the intake manifold of the intake air passage 2. The exhaust gas recirculation valve actuator 6 is connected to a vacuum source 16 such as a vacuum pump through a vacuum passage 15 which is equipped with a first electromagnetic valve 17. The first electromagnetic valve 17 is duty-controlled by a duty control signal which is provided by an electronic control unit (ECU) 50 to switch the vacuum passage 15 between the vacuum source 16 and the atmosphere so as thereby to open and close the exhaust gas recirculation valve 5. The intake valve 11 is connected to the vacuum source 16 through a vacuum passage 19 with a second electromagnetic valve 18 installed thereto. The second electromagnetic valve 18 is duty-controlled by a duty control signal which is provided by the electronic control unit (ECU) 50 to control the intake valve so as to regulate the amount of flesh intake air that is introduced into the combustion chambers 1a of diesel engine 1 through the intake air passage 2. The turbine 13 is provided with a turbine actuator 13a is connected to the vacuum source 16 through a vacuum passage 21 with a third electromagnetic valve 20 installed thereto and operative to vary a nozzle angle of the variable nozzle of turbine 13 so as thereby to vary the turbine efficiency. The third electromagnetic valve 20 is duty-controlled by a duty control signal which is provided by the electronic control unit (ECU) 50 to control the turbine actuator 13a so as to adjust the turbine efficiency. The control system further includes an accelerator travel sensor 31 operative to monitor a travel of an accelerator pedal (not shown), a speed sensor 32 operative to monitor the rotational speed of an output shaft (not shown) of the diesel engine 1, and a pressure sensor 36 operative to monitor the pressure of fuel in the common-rail 23. These sensors 7, 12, 31, 32 and 36 provide signals representative of an amount of flesh intake air *Fair* that is introduced into the combustion chambers 1a of diesel engine 1, intake air pressure *Bst*, an accelerator travel *acc*, an engine speed *Ne* and common-rail fuel pressure *CRP*, respectively, and send them to the electronic control unit (ECU) 50.

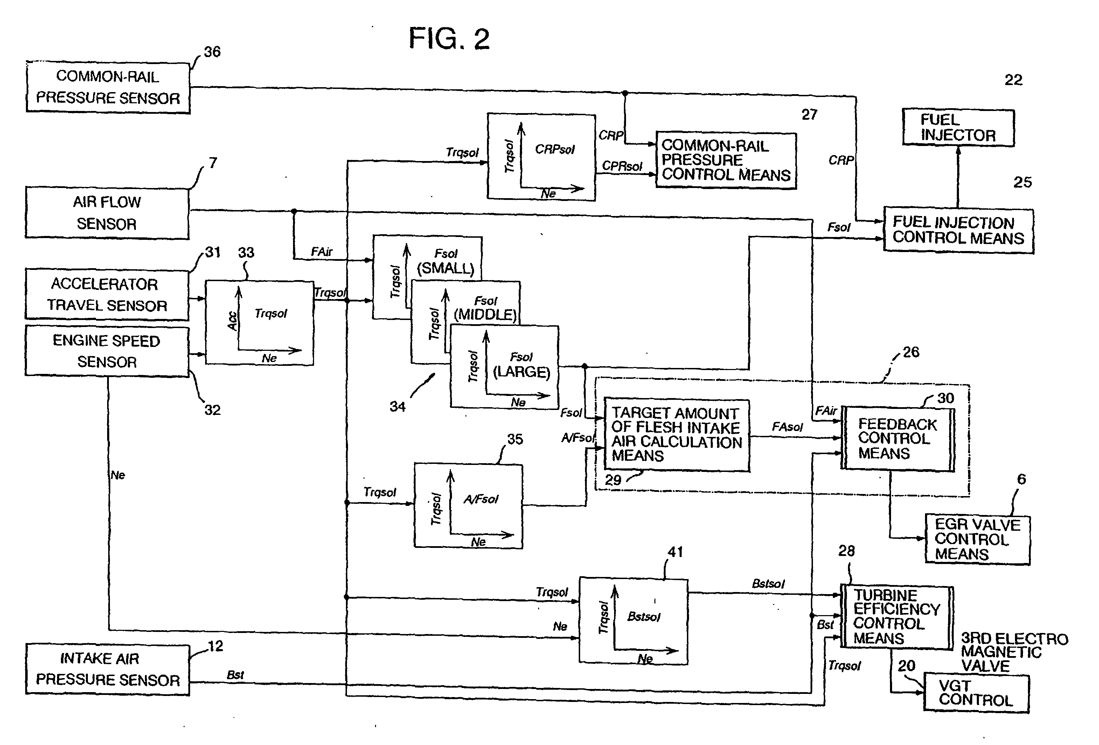

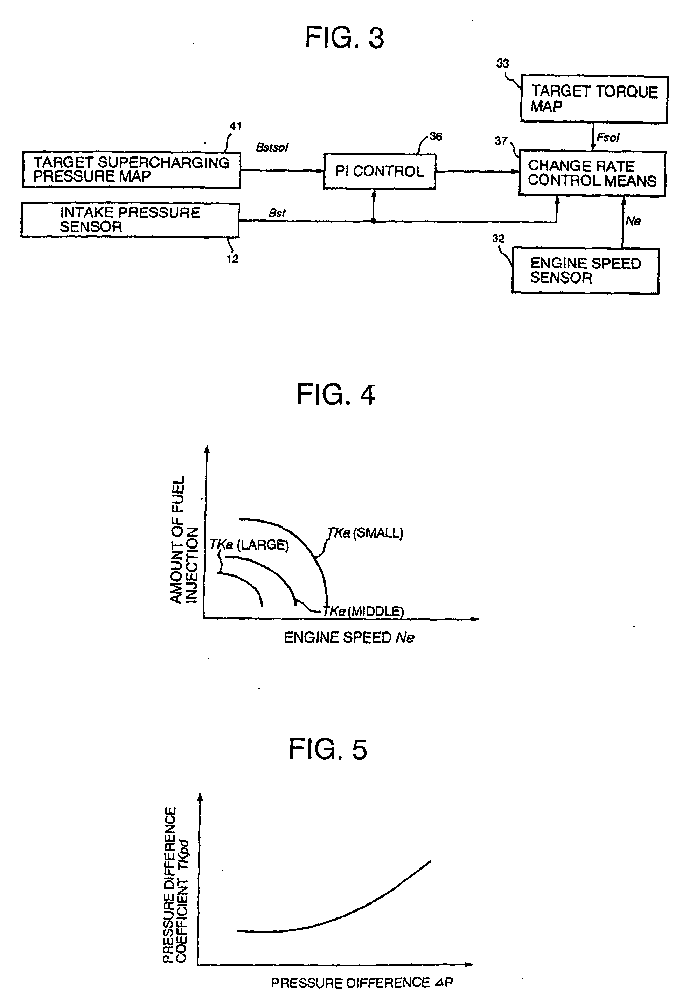

Figure 2 is a schematic functional block diagram illustrating the electronic control unit (ECU) 50 which is conceptually divided into various control sections or means for easy explanation. A fuel injection control means 25 controls the amount of fuel that is delivered by the fuel injector 22. Specifically, the fuel injection control means 25 determines target engine output torque *trqsol* with reference to a torque map 33 in which a target engine output torque *trqsol* is defined with respect to accelerator travel *acc* and engine speed *Ne,* and determines a target amount of fuel injection *Fsol* with reference to a torque map 34 in which target amount of fuel injection *Fsol* is defined with respect to target engine output torque *trqsol*, actual amount of flesh intake air *Fair* and engine speed *Ne.* The fuel injection control means 25 controls an energization time interval for which the fuel injector 22 remains open on the basis of the target amount of fuel injection engine *Fsol* and common-rail fuel pressure *CRP* so as thereby to control the amount of fuel injection. An exhaust gas recirculation control means 26 comprises a sub-means 29 and 30. The sub-means 29 calculates a target amount of flesh intake air *FAsol* that is introduced into the combustion chamber of the diesel engine 1 on the basis of a target air-to-fuel ratio *A*/*Fsol* which is determined with respect to the target engine output torque *trqsol* and an engine speed *Ne* with reference to an air-to-fuel ratio map 35 and the target amount of fuel injection *Fsol* determined with reference to the fuel injection map 34. The sub-means 30 provides the exhaust gas recirculation valve actuator 6 with a control signal for feedback controlling the exhaust gas recirculation valve 5 by PI control so as to remove a quantitative difference between the target amount of flesh intake air *FAsol* and the actual amount of flesh intake air *Fair,* i.e. to make an actual excess air ratio coincident with a target excess air ratio. A common-rail fuel pressure control means 27 controls the pressure of fuel in the common rail 23. A turbine efficiency control means 28 determines a target supercharging pressure *Bstsol* with respect to the target engine output torque *trqsol* and the engine speed *Ne* with reference to a supercharging pressure map 41 and provides the turbine actuator 13a with a control signal for feedback controlling the turbine efficiency so as to remove a pressure difference between the intake air pressure *Bst* detected by the pressure sensor 12 and the target supercharging pressure *Bstsol*. Specifically, as shown in Figure 3, the turbine efficiency control means 28 comprises a PI control sub-means 36 for feedback controlling a nozzle angle of the variable nozzle of turbine 13 by PI control and a control sub-means 37 for controlling a nozzle angle change rate at which the nozzle is controlled. The PI control sub-means 36 provides the third electromagnetic valve 20 with a control signal on the basis of the intake air pressure *Bst* detected by the pressure sensor 12 and the target supercharging pressure *Bstsol* and feedback controls a nozzle angle of the variable nozzle of turbine 13 by PI control with the control signal so as to make a turbine efficiency coincident with a target turbine efficiency. The control sub-means 37 calculates a turbine efficiency change rate coefficient *TKsp*, i.e. a coefficient difference between a change rate basic coefficient *TKa* which is determined on the basis of the target engine output torque *trqsol* and the engine speed *Ne* with reference to a control rate basic coefficient map such as shown in Figure 4 from a pressure difference coefficient *TKpd* which is determined with respect to a pressure difference Δ*P* between pressure before and after the exhaust gas recirculation valve 5 according to the intake air pressure *Bst* with reference to a pressure difference coefficient map such as shown in Figure 5 and controls the nozzle angle change rate according to the turbine efficiency change rate coefficient *TKsp*. As seen in Figure 5, the map defines pressure difference coefficient *TKpd* such that it becomes greater with an increase in pressure difference Δ*P*. Accordingly, the turbine efficiency change rate coefficient *TKsp* gradually becomes greater as the pressure difference Δ*P* increases. By means of controlling the third electromagnetic valve 20 with the turbine efficiency change rate coefficient *TKsp*, the turbine efficiency change rate is controlled to become lower as the pressure difference Δ*P* rises.

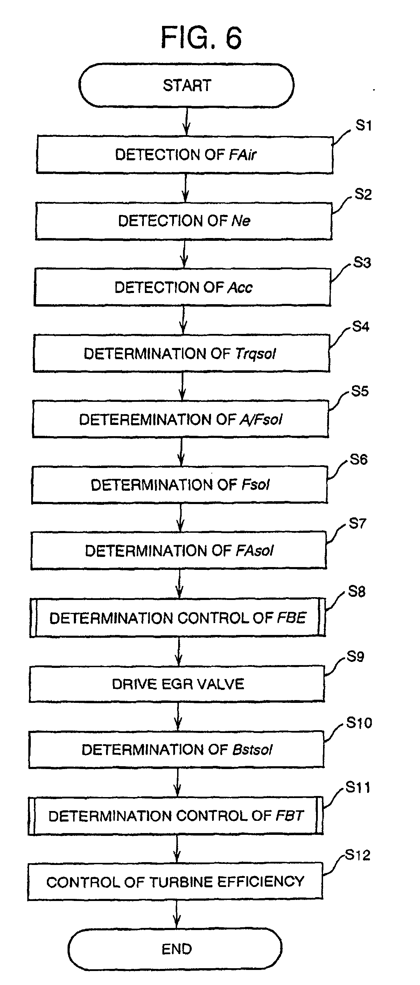

Figure 6 is a flow chart illustrating a sequence routine of general control of the control system for the turbocharged diesel engine. When the sequence logic commences and control proceeds to function blocks at steps S1 - S3 where various control parameters including an actual amount of flesh intake air *Fair,* an engine speed *Ne* and an accelerator travel *acc* are detected by the air flow sensor 7, the speed sensor 32 and the accelerator travel sensor 31, respectively. Subsequently, various target values are determined. That is, a target engine output torque *trqsol* is determined with respect to the engine speed *Ne* and the accelerator travel *acc* with reference to the torque map 33 at step S4. A target air-to-fuel ratio *A*/*Fsol* is determined with respect to the engine speed *Ne* and the target engine output torque *trqsol* with reference to the air-to-fuel ratio map 35 at step S5. Further, a target amount of fuel injection *Fsol* with reference to the fuel injection map 34 at step S6. Thereafter, a target amount of flesh intake air *FAsol* is calculated by multiplying the target amount of fuel injection *Fsol* and the target air-to-fuel ratio *A*/*Fsol* together at step S7. Then, a feedback control value *FBE* is determined at step S8. The feedback control value *FBE* is used to feedback control the exhaust gas recirculation valve 5 so as to remove a quantitative difference between the actual amount of flesh intake air *Fair* and the target amount of flesh intake air *FAsol* and thereby to make an actual excess air ratio coincident with a target excess air ratio. After driving the exhaust gas recirculation valve actuator 6 with a control signal representative of the feedback control value *FBE* to open and close the exhaust gas recirculation valve 5 at step S9, a target supercharging pressure *Bstsol* is determined on the basis of the target engine output torque *trqsol* and the engine speed *Ne* with reference to the supercharging pressure map 41 at step S10. Thereafter, a sequence subroutine of feedback control value determination in which a feedback control value *FBT* used in feedback control for removing a pressure difference between the target supercharging pressure *Bstsol* and the intake air pressure *Bst* is called for at step S11.

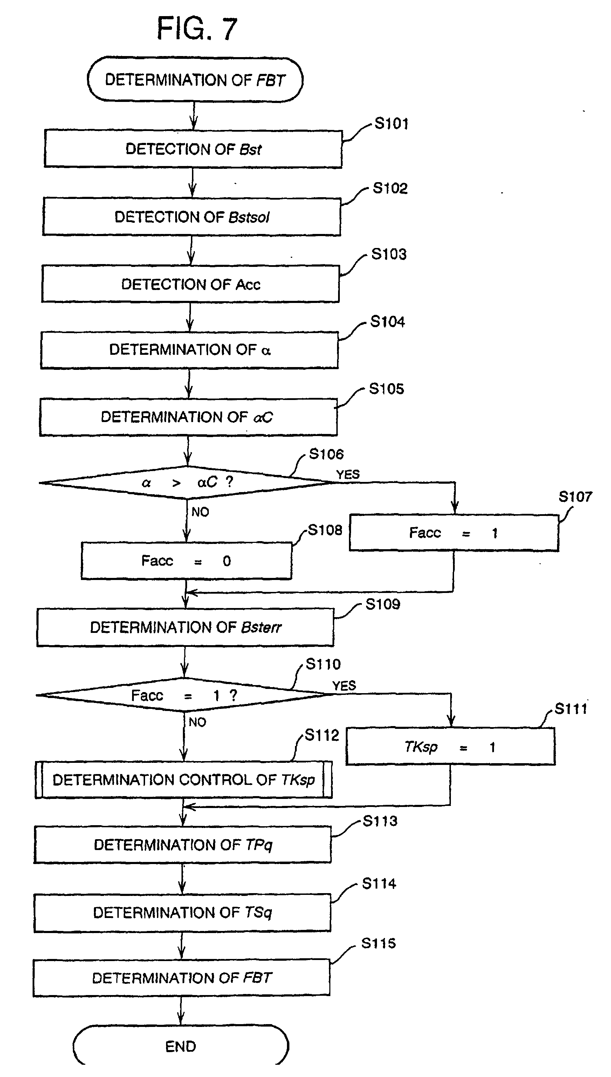

Figure 7 is a flow chart illustrating the feedback control value determination subroutine. When the sequence logic commences and control proceeds to function blocks at step S101 - S103 where various parameters including intake air pressure *Bst* detected by the pressure sensor 12, the target supercharging pressure *Bstsol* determined at step S10 in the general control routine and an accelerator travel *acc* detected by the accelerator travel sensor 31 are read in, respectively. Subsequently, after calculating an accelerator travel change rate α with respect to time at step S104, and determining a threshold value *αC* which is used to make a judgement as to whether it is within a beginning period of acceleration with reference to a threshold value map in which a threshold value *αC* is defined according to engine operating conditions at step S105, a judgement is made at step S106 as to whether the accelerator travel change rate α is greater than the threshold value *αC*. When the accelerator travel change rate α is greater than the threshold value *αC*, this indicates that it is within the beginning period of acceleration, then, an acceleration flag *Facc* is set up to a state "1" at step S107. On the other hand, when the accelerator travel change rate α is equal to or less than the threshold value *αC*, the acceleration flag *Facc* is reset down to a state "0" at step S108. Subsequently to setting or resetting the acceleration flag *Facc*, after determining a pressure difference *Bsterr* by subtracting the intake air pressure *Bst* from the target supercharging pressure *Bstsol* at step S109, a judgement is made st step S110 as to whether the acceleration flag *Facc* has been set up to the state "0." When the acceleration flag *Facc* is set up, this indicates that it is within the beginning period of acceleration, then, the turbine efficiency change rate coefficient *TKsp* is set to one (1) at step S111. On the other hand, when the acceleration flag *Facc* is reset down, this indicates that the vehicle is out of the beginning period of acceleration, then, a sequence subroutine of calculating a turbine efficiency change rate coefficient *TKsp* is called for at step S112. After the determination of turbine efficiency change rate coefficient *TKsp* at step S111 or S112, a proportional control coefficient *TPq* for the nozzle angle feedback control is determined by multiplying the pressure difference *Bsterr*, the turbine efficiency change rate coefficient *TKsp* and a predetermined proportional coefficient *TKp* together at step S113, and an integral control coefficient *TSq* for the nozzle angle feedback control is determined by adding a value determined by multiplying the pressure difference *Bsterr,* the turbine efficiency change rate coefficient *TKsp* and a predetermined proportional coefficient *TKs* together to the last integral control coefficient *TSq'* at step S114. Thereafter, a feedback control value *FBT* is determined by multiplying a actuation coefficient *TKv* predetermined according to a characteristic of the exhaust gas recirculation valve actuator 6 and the sum of the proportional control coefficient *TPq* and the integral control coefficient *TSq* together at step S115. Then, the final step orders return to the general control routine, after the step in the general routine calling for the feedback control value determination subroutine.

In the general control routine, the turbine efficiency control means 28 provides the third electromagnetic valve 20 with a control signal representative of the feedback control value *FBT* with which the turbine efficiency is controlled at step S12.

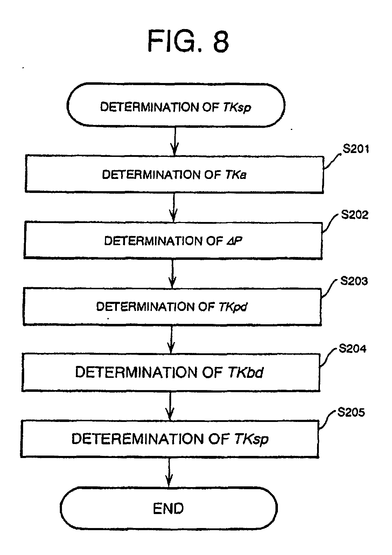

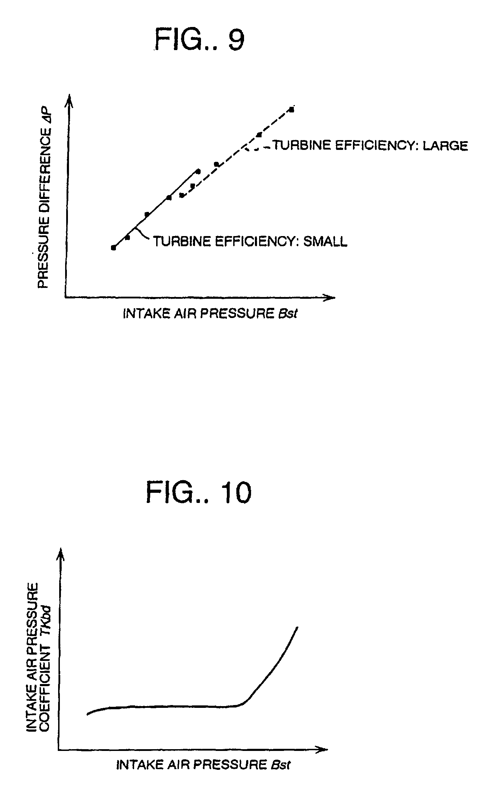

Figure 8 is a flow chart illustrating the sequence subroutine of determining a turbine efficiency change rate coefficient *TKsp* which is called for at step S112 in the feedback control value determination subroutine. When the sequence logic commences and control proceeds directly to a block at step S201 where a change rate basic coefficient *TKa* for a current target amount of fuel injection *Fsol* and a current engine speed *Ne* is determined with reference to the change rate basic coefficient map shown in Figure 4. Subsequently, a pressure difference *ΔP* between pressure before and after the exhaust gas recirculation valve 5 is estimated according to the intake air pressure *Bst* at step S202. Specifically, as shown in Figure 9, the pressure difference Δ*P* and the intake air pressure *Bst* detected by the pressure sensor 12 are proportionally related to each other in spite of how large the turbine efficiency is, and the intake air pressure *Bst* has a tendency to increase as the intake air pressure *Bst* rises. In consequence, the pressure difference Δ*P* can be estimated based on the intake air pressure *Bst* from the relationship. After determining a pressure difference coefficient *TKpd* for to the pressure difference Δ*P* with reference to the pressure difference coefficient map shown in Figure 5 at step S203, an intake air pressure coefficient *TKbd* for the intake air pressure *Bst* is determined with reference to an intake air pressure coefficient map such as shown in Figure 10 at step S204. Finally, a turbine efficiency change rate coefficient *TKsp* is determined by subtracting the pressure difference coefficient *TKpd* and the intake air pressure coefficient *TKbd* from the change rate basic coefficient *TKa* at step S205. Then, the final step orders return to the feedback control value determination subroutine, after the step in the feedback control value determination subroutine calling for the turbine efficiency change rate coefficient determination subroutine.

As described above, in a turbocharged engine control system which has the exhaust gas recirculation control means 26 for detecting a value relating to an actual excess air ratio and feedback controlling the exhaust gas recirculation valve 5 so as to make the actual excess air ratio coincident with a target excess air ratio and the turbine efficiency control means 28 for varying turbine efficiency of the turbocharger 8, because the control sub-means 37 which varies the turbine efficiency change rate slower with an increase in pressure difference *ΔP* estimated based on intake air pressure *Bst* is provided, the control of operation of the exhaust gas recirculation valve 5 and turbine efficiency of the turbocharger is properly performed, so that, while an increase in particulate or NOx emission or an occurrence of torque shock due to a deviation between an actual excess air ratio and a target excess air ratio is effectively prevented, the supercharging pressure of the turbocharger 8 is properly controlled in conformity with engine operating conditions. That is, the turbine efficiency change rate is lowered by performing the feedback control of the exhaust gas recirculation valve 5 on the basis of a turbine efficiency change rate coefficient *TKsp* which is set to a smaller value in an engine operating state where the pressure difference *ΔP* between pressure before and after the exhaust gas recirculation valve 5 is expected to be great because of high intake air pressure *Bst* as compared to an engine operating state where the pressure difference Δ*P* is small, as a result of which it is prevented that the amount of exhaust gas which is admitted into the intake air passage by the exhaust gas recirculation valve 5 has a significant difference from a target amount of exhaust gas according to a pressure difference *ΔP* between pressure before and after the exhaust gas recirculation valve 5, so that the exhaust gas recirculation control is performed always suitably for engine operating conditions. Therefore, the exhaust gas recirculation valve 5 is prevented from causing overshooting and/or hunting resulting from performing the control for causing a prominent change in turbine efficiency in an engine operating state where a slight change in exhaust gas recirculation valve lift causes a great change in the amount of exhaust gas that is recirculated due to large pressure difference *ΔP*, so that while it is prevented not only that an actual excess air ratio deviates from a target excess air ratio, an occurrence of torque shock due to a rapid change in the amount of intake air is prevented. Contrary to the above, in an engine operating state where the pressure difference *ΔP* is small and even a significant change in exhaust gas recirculation valve lift does not cause so great change in the amount of exhaust gas that is recirculated, while the turbine efficiency control is performed without an effect of insufficiently improving fuel economy due resulting from a tendency for the turbine efficiency control to become sluggish, the feedback control of the exhaust gas recirculation valve 5 for reducing particulate such as smoke and unburnt fuel and NOx emission in exhaust gas is performed without causing hunting and/or overshooting of the exhaust gas recirculation valve 5.

The control system for a turbocharged diesel engine is structured so as to estimate a pressure difference Δ*P* between pressure before and after the exhaust gas recirculation valve 5 according to intake air pressure *Bst* detected by the pressure sensor 12, which is grounded on an inferential fact that there is a certain proportional relation between the pressure difference Δ*P* and the intake air pressure *Bst*, so that it is made simple to detect the pressure difference Δ*P*, and besides, the turbine efficiency control is performed in conformity with the pressure difference *ΔP*. In place of estimating a pressure difference Δ*P* between pressure before and after the exhaust gas recirculation valve 5 according to intake air pressure *Bst*, a pressure difference Δ*P* between pressure before and after the exhaust gas recirculation valve 5 may be directly detected. For example, a pressure difference Δ*P* may be determined based on pressure before and after the exhaust gas recirculation valve 5 directly detected by a pair of pressure sensors, respectively, or based on intake air pressure detected by the pressure sensor 12 and exhaust gas pressure detected by another pressure sensor.

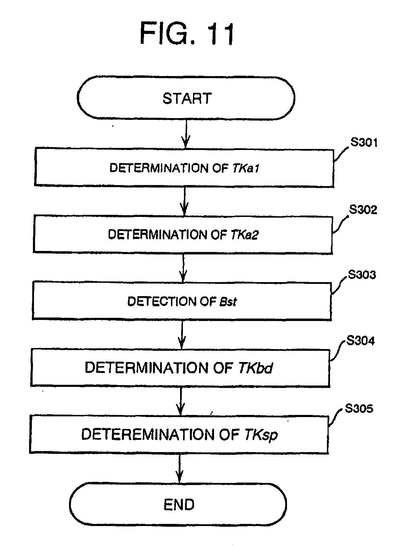

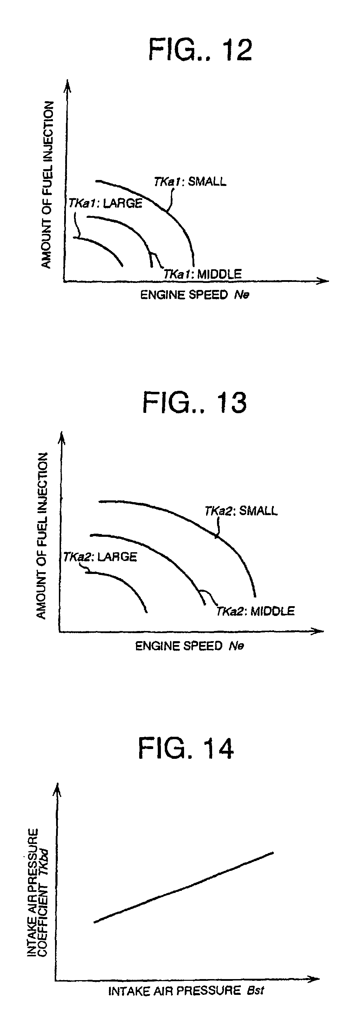

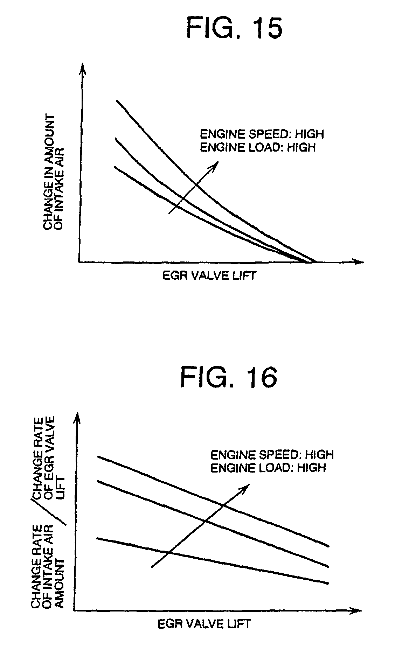

Figure 11 is a flow chart illustrating a variation of the sequence subroutine of determining a turbine efficiency change rate coefficient *TKsp* which is called for at step S112 in the feedback control value determination subroutine. In the turbine efficiency change rate coefficient determination subroutine, a turbine efficiency change rate coefficient *TKsp* is controlled to become smaller with a rise in intake air pressure *Bst* become. Specifically, as shown in Figure 11, when the sequence logic commences and control proceeds directly to a blocks at steps S301 and S302 where first and second change rate basic coefficients *TKa1* and *TKa2* for a current target amount of fuel injection *Fsol* and a current engine speed *Ne* are determined with reference to first and second change rate basic coefficient maps shown in Figures 12 and 13, respectively. Subsequently, after detecting intake air pressure *Bst by* the pressure sensor 12 at step S303, an intake air pressure coefficient *TKbd* for the intake air pressure *Bst* is determined with reference to an intake air pressure coefficient map such as shown in Figure 14 at step S304. Finally, a turbine efficiency change rate coefficient *TKsp* is determined by subtracting the sum of the second change rate basic coefficient *TKa2* and the intake air pressure coefficient *TKbd* from the first change rate basic coefficient *TKa1* at step S205. In the case where the turbine efficiency change rate coefficient *TKsp* is determined based directly on the intake air pressure *Bst* which is employed as the pressure difference Δ*P* between pressure before and after the exhaust gas recirculation valve 5, since both gradient and offset of turbine efficiency change rate coefficient *TKsp* vary depending upon engine operating conditions, it is necessary to use the first change rate basic coefficient *TKa1* relating to gradient and the second change rate basic coefficient *TKa2* relating to offset in the determination of turbine efficiency change rate coefficient *TKsp*. In particular, since the pressure difference Δ*P* between pressure before and after the exhaust gas recirculation valve 5 becomes high due to a small valve lift or opening of the exhaust gas recirculation valve 5 in a range of high engine speeds and high engine loads where the amount of exhaust gas that is discharged from the diesel engine 1 is increased, as a result of which there is a tendency for a change in the amount of intake air that is admitted into the intake passage 2 to be larger in the range of high engine speeds and high engine loads as compared with in a range of lower engine speeds and lower engine loads as shown in Figure 15 and for a ratio of a change rate of the amount of intake air relative to a change rate of exhaust gas recirculation valve lift to be higher in the range of high engine speeds and high engine loads as compared with in the range of lower engine speeds and lower engine loads as shown in Figure 16, a change rate of the actual amount of flesh intake air remarkably varies according to an increase or a decrease in the pressure difference Δ*P* between pressure before and after the exhaust gas recirculation valve 5 even for same change rates of exhaust gas recirculation valve lift, which is accompanied by a sharp increase in the actual amount of flesh intake air. Accordingly, the sharp change in the actual amount of flesh intake air is effectively kept under control by lowering the change rate of turbine efficiency in the range of high engine speeds and high engine loads.

As described above, in a turbocharged engine control system which has the exhaust gas recirculation control means 26 for detecting a value relating to an actual excess air ratio and feedback controlling the exhaust gas recirculation valve 5 so as to make the actual excess air ratio coincident with a target excess air ratio and the turbine efficiency control means 28 for varying turbine efficiency of the turbocharger 8 by regulating the nozzle angle of the variable nozzle of turbine 13 depending upon which an area of exhaust gas flow changes, the turbocharged diesel engine control system is preferred to have pressure detecting means such as the pressure sensor 12 for detecting intake air pressure as a parameter relating to the pressure difference Δ*P* between pressure before and after the exhaust gas recirculation valve 5 and the control means 37 for lowering the turbine efficiency change rate so as to make a rate at which the exhaust gas recirculation valve 5 operates slower as the intake air pressure becomes higher and to make a change rate of actual excess air ratio due to operation of the exhaust gas recirculation valve 5 slower than that due to regulation of the nozzle angle of the variable nozzle of turbine 13.

According to the above embodiment of the diesel engine control system having the exhaust gas recirculation valve 5 which causes a change in the amount of exhaust gas recirculation in conformity even with a slight change in valve opening and is hastened in operation so as to change its opening at a rate which is low in itself but higher than a rate at which the nozzle angle of the variable nozzle of turbine 13 changes, the exhaust gas recirculation valve 5 is prevented from overshooting and/or hunting and causing aggravation of combustibility. Further, because the change rate of turbine efficiency is risen in the event where the vehicle is judged to be within the beginning period of acceleration as a result of comparison of a change rate α with respect to time of an accelerator travel *acc* detected by the accelerator travel sensor 31 with a threshold value *αC*, the responsiveness of the intake air control is improved with an effect of securing acceleration capability of the vehicle, while preventing generation of smoke, during a shift from an ordinary drive state where the diesel engine 1 operates with no engine load to an acceleration drive state. That is, since the turbine efficiency change rate coefficient *TKsp* is set to the maximum value of one (1) so as thereby to hasten the change rate of turbine efficiency when the vehicle is judged to be within the beginning period of acceleration, the turbocharger 8 is controlled to rapidly boost charging pressure with an effect of securing an amount of flesh intake air that is actuary introduced. Accordingly, the responsiveness of the intake air control is improved with an effect of securing the acceleration capability of the engine, while effectively preventing generation of smoke due to deviation between an actual excess air ratio and a target excess air ratio, within the beginning period of acceleration. In the case where the beginning period of acceleration in which the change rate of turbine efficiency is hastened is an early period of travel from a fully released position of the accelerator pedal, when acceleration is caused starting from a range of engine idling conditions or a range of engine operating conditions where the energy of exhaust gas is low while the accelerator pedal remains fully released during a gear shift, the turbocharging effect is immediately attained at the beginning of acceleration with an effect of securing the responsiveness of acceleration, as a result of which the acceleration capability is improved in a drive state where there is a strong demand for the responsiveness of acceleration.

According to the above embodiment of the control system for a turbocharged diesel engine equipped with the exhaust gas recirculation passage 4 which is connected to the exhaust passage 3 upstream from the turbine 13 and the exhaust gas recirculation control means 26 for feedback controlling the exhaust gas recirculation valve 5 so as to make the actual excess air ratio coincident with a target excess air ratio, the variable control of turbine efficiency and the operation control of exhaust gas recirculation valve 5 are simultaneously performed in a range of engine operating conditions where the pressure difference *ΔP* between pressure before and after the exhaust gas recirculation valve 5 is great, so as to effectively prevent the exhaust gas recirculation valve 5 from overshooting and/or hunting due to a sharp change in the amount of exhaust gas recirculation. That is, in the case where the exhaust gas recirculation valve 5 is feedback controlled so as to remove the difference between an actual amount of flesh intake air *Fair* detected by the air flow sensor 7 as a value relating to an actual excess air ratio and a target amount of flesh intake air *FAsol* determined on the basis of a target amount of fuel injection *Fsol* which is determined on the basis of target engine output torque *trqsol* according to an accelerator travel *acc* and a target air-to-fuel ratio *F*/*Asol* as a value relating to a target excess air ratio, there is a tendency for the feedback control of exhaust gas recirculation valve 5 to cause aggravation of controllability due to fluctuations in the difference between these actual and target amounts of flesh intake air *Fair* and *FAsol*. Therefore, the control system of the invention restricts a deviation of an actual excess air ratio from a target excess air ratio in a range of engine operating conditions where the pressure difference *ΔP* between pressure before and after the exhaust gas recirculation valve 5 is great by lowering the change rate of turbine efficiency, so as to effectively prevent an increase in the amount of particulate such as smoke and unburnt fuel and NOx emissions in the exhaust gas.

An actual amount of flesh intake air *Fair* used as a value relating to actual excess air ratio in the above embodiment may be replaced an actual excess air ratio which can be known from an air-to-fuel ratio detected by an oxygen (O₂) sensor disposed in an exhaust passage. A cylinder injection type of gasoline engine such as a lean-burn engine may be equipped with the control system of the invention. In such a case, the control system is adapted to control the amount of exhaust gas which is admitted into the intake passage 2 so as to reduce NOx emissions while preventing aggravation of combustibility. Contrary to the cylinder injection type of gasoline engine, the diesel engine which is operated with an air-fuel mixture significantly leaner as compared with the cylinder injection type of gasoline engine is hard to increase the effect of lowering NOx by means of a catalytic converter, the control system of the invention when applied to the diesel engine achieves a significant effect of reducing particulate such as smoke and unburned fuel and NOx emissions. Furthermore, although the control system of the invention is applied to an engine equipped with a variable geometry turbocharger having a turbine whose turbine efficiency changes by varying the nozzle angle of the turbine, it may be applied to an engine equipped with a variable geometry turbocharger having a turbine whose turbine efficiency is changed by controlling operation of a waste-gate valve which is disposed in a passage through which exhaust gases flow bypassing the turbine of the turbocharger.

It is to be understood that although the present invention has been described with regard to preferred embodiments thereof, various other embodiments and variants may occur to those skilled in the art, which are within the scope of the invention, and such other embodiments and variants are intended to be covered by the following claims.

## Claims

1. A control system for a turbocharged engine (1) equipped with exhaust gas recirculation control means (26) for detecting a value relating to an actual excess air ratio and feedback controlling an exhaust gas recirculation valve (5) so as to bring said actual excess air ratio into coincidence with a target excess air ratio and turbine efficiency control means (28) for controlling a turbocharger (8) to change turbine efficiency of said turbocharger, **characterized by**:
detection means (12) for detecting a value relating to a pressure difference between pressure before and after said exhaust gas recirculation valve (5), and control means (26, 37) for controlling said turbine efficiency control means (28) to vary a change rate at which said turbine efficiency changes so as to become lower as said pressure difference rises.

2. A control system for a turbocharged engine as defined in claim 1, wherein said turbine efficiency control means (28) changes said turbine efficiency by changing a nozzle angle of a turbine nozzle upon which an exhaust gas flow area of a turbine (13) of said turbocharger (8) depends such that a change rate at which said nozzle angle changes becomes lower as said pressure difference rises.

3. A control system for a turbocharged engine as defined in claim 1 or 2, wherein said turbine efficiency control means (28) includes a waste-gate which is disposed in a passage through which an exhaust gas flows bypassing a turbine (13) of said turbocharger (8) and controls operation of said waste-gate to change said turbine efficiency of said turbine (13) such that a change rate at which said waste-gate operates becomes lower as said pressure difference rises.

4. A control system for a turbocharged engine as defined in anyone of the claims 1 to 3, wherein said detection means (12) comprises a pressure sensor (12) operative to detect intake air pressure of intake air introduced into an intake passage (2) as said value relating to said pressure difference between pressure before and after said exhaust gas recirculation valve (5) and said turbine efficiency control means (28) controls said turbocharger (8) to change said turbine efficiency at a change rate which is made lower as said intake air pressure rises.

5. A control system for a turbocharged engine as defined in anyone of the claims 1 to 4, wherein said turbine efficiency control means (28) controls said turbocharger (8) to change said turbine efficiency at a change rate which is made small while said turbocharged engine (1) operates at high speeds and high loads.

6. A control system for a turbocharged engine as defined in anyone of the claims 1 to 5, wherein said turbine efficiency control means (28) controls said turbocharger (8) to change a nozzle angle of a turbine nozzle upon which an exhaust gas flow area of a turbine (13) of said turbocharger (8) depends so as thereby to change turbine efficiency of said turbocharger, said detection means (12) detects intake air pressure of intake air introduced into an intake passage (2) as a value relating to a pressure difference between pressure before and after said exhaust gas recirculation valve (5), and said control means (26) controls a change rate at which said exhaust gas recirculation valve (5) is operated to become lower and a change rate of said actual excess air ratio to become greater when caused by operation of said exhaust gas recirculation valve (5) than when caused by a change in said nozzle angle.

7. A control system for a turbocharged engine as defined in anyone of the claims 1 to 6, wherein said turbine efficiency control means (28) varies a change rate at which said turbine efficiency changes to be high at the beginning period of acceleration from a state wherein said turbocharged engine operates in a range of lower speeds and lower loads.

8. A control system for a turbocharged engine as defined in claim 7, wherein said turbine efficiency control means (28) varies said change rate to be high during an early stage of acceleration since an accelerator pedal is in its fully released position.

9. A control system for a turbocharged engine as defined in anyone of the claims 1 to 8, wherein an exhaust gas recirculation passage (4) extends from an exhaust passage (3) upstream from a turbine (13) of said turbocharger (8) and said exhaust gas recirculation control means (26) feedback controls a valve lift of said exhaust gas recirculation valve (5) so as to bring said actual excess air ratio into coincidence with said target excess air ratio.

## Patentansprüche

1. Kontroll- bzw. Steuer- bzw. Regelsystem für einen turboaufgeladenen Motor bzw. Verbrennungsmotor (1), welches mit Abgas-Rezirkulations-Regel- bzw. -Steuermitteln (26) zum Detektieren eines Werts in bezug auf ein tatsächliches Überschußluftverhältnis und zum Feedbacksteuern bzw. -regeln eines Abgas-Rezirkulationsventils (5), um das tatsächliche Überschußluftverhältnis in Übereinstimmung mit einem Ziel-Überschußluftverhältnis zu bringen, und Turbineneffizienz-Regel- bzw. -Steuermitteln (28) zum Regeln bzw. Steuern eines Turboladers (8) ausgerüstet ist, um eine Turbineneffizienz des Turboladers zu ändern, **gekennzeichnet durch**:
Detektionsmittel bzw. -einrichtungen (12) zum Detektieren eines Werts, welcher sich auf eine Druckdifferenz zwischen einem Druck vor und nach dem Abgas-Rezirkulationsventil (5) bezieht, und Regel- bzw. Steuermittel (26, 27) zum Regeln bzw. Steuern der Turbineneffizienz-Steuermittel (28), um eine Rate bzw. Geschwindigkeit zu ändern, mit welcher sich die Turbineneffizienz ändert, um geringer zu werden, wenn die Druckdifferenz ansteigt.

2. Regelsystem für einen turboaufgeladenen Verbrennungsmotor nach Anspruch 1, worin die Turbineneffizienz-Steuermittel (28) die Turbineneffizienz durch ein Ändern eines Düsenwinkels einer Turbinendüse bzw. -öffnung ändern, von welchen eine Abgas-Strömungsfläche bzw. ein Abgas-Strömungsbereich einer Turbine (13) des Turboladers (8) derart abhängt, daß eine Änderungsrate, mit welcher sich der Düsenwinkel ändert, niedriger wird, wenn die Druckdifferenz ansteigt.

3. Regelsystem für einen turboaufgeladenen Verbrennungsmotor nach Anspruch 1 oder 2, worin die Turbineneffizienz-Steuermittel (28) einen Abgasschieber bzw. ein Ladedruckregelventil bzw. Bypassventil bzw. eine Abgasklappe bzw. ein Wastegate beinhalten, welche(r) in einem Durchtritt angeordnet ist, durch welchen ein Abgas unter Umgehen einer Turbine (13) des Turboladers (8) strömt, und einen Betrieb des Wastegates regelt bzw. steuert, um die Turbineneffizienz der Turbine (13) derart zu ändern, daß eine Änderungsrate, bei welcher das Wastegate arbeitet, niedriger wird, wenn die Druckdifferenz ansteigt.

4. Regelsystem für einen turboaufgeladenen Verbrennungsmotor nach einem der vorhergehenden Ansprüche 1 bis 3, worin die Detektionsmittel (12) einen Drucksensor (12) umfassen, welcher arbeitet, um einen Einlaßluftdruck von Einlaßluft zu detektieren, welche in einen Einlaßdurchtritt (2) als der Wert eingebracht wird, welcher sich auf die Druckdifferenz zwischen dem Druck vor und nach dem Abgas-Rezirkulationsventil (5) bezieht, und die Turbineneffizienz-Steuermittel (28) den Turbolader (8) regeln bzw. steuern, um die Turbineneffizienz bei einer Änderungsrate zu ändern, welche niedriger gemacht wird, wenn der Einlaßluftdruck ansteigt.

5. Regelsystem für einen turboaufgeladenen Verbrennungsmotor nach einem der Ansprüche 1 bis 4, worin die Turbineneffizienz-Steuermittel (28) den Turbolader (8) regeln bzw. steuern, um die Turbineneffizienz bei einer Änderungsrate zu ändern, welche gering gemacht wird, während der turboaufgeladene Verbrennungsmotor (1) bei hohen Drehzahlen bzw. Geschwindigkeiten und hohen Lasten arbeitet.

6. Regelsystem für einen turboaufgeladenen Verbrennungsmotor nach einem der Ansprüche 1 bis 5, worin die Turbineneffizienz-Steuermittel (28) den Turbolader (8) regeln bzw. steuern, um einen Düsenwinkel einer Turbinendüse bzw. -öffnung zu ändern, von welchem eine Abgas-Strömungsfläche einer Turbine (13) des Turboladers (8) abhängt, um dadurch eine Turbineneffizienz des Turboladers zu ändern, die Detektionsmittel (12) einen Einlaßluftdruck an Ansaug- bzw. Einlaßluft, welche in einen Einlaßquerschnitt (2) eingebracht wird, als einen Wert detektieren, welcher sich auf eine Druckdifferenz zwischen einem Druck vor und nach dem Abgas-Rezirkulationsventil (5) bezieht, und die Regel- bzw. Steuermittel (26) eine Änderungsrate, bei welcher das Abgas-Rezirkulationsventil (5) betätigt wird, um niedriger zu werden, und eine Änderungsrate des tatsächlichen Überschlußluftverhältnisses regeln bzw. steuern, um größer zu werden, wenn es durch eine Betätigung des Abgas-Rezirkulationsventils (5) bewirkt wird, als wenn es durch eine Änderung im Düsenwinkel bewirkt wird.

7. Regelsystem für einen turboaufgeladenen Verbrennungsmotor nach einem der Ansprüche 1 bis 6, worin die Turbineneffizienz-Steuermittel (28) eine Änderungsrate, bei welcher sich die Turbineneffizienz ändert, um an der Beginnperiode einer Beschleunigung hoch zu sein, von einem Zustand ändern, wo der turboaufgeladene Verbrennungsmotor in einem Bereich von niedrigeren Drehzahlen bzw. Geschwindigkeiten und niedrigeren Lasten arbeitet.

8. Regelsystem für einen turboaufgeladenen Verbrennungsmotor nach Anspruch 7, worin die Turbineneffizienz-Steuermittel (28) die Änderungsrate ändern, um während einer frühen Stufe einer Beschleunigung hoch zu sein, da sich ein Gas- bzw. Beschleunigungspedal in seiner vollständig freigegebenen Position befindet.

9. Regelsystem für einen turboaufgeladenen Verbrennungsmotor nach einem der Ansprüche 1 bis 8, worin sich ein Abgas-Rezirkulationsdurchtritt (4) von einem Abgas-Durchtritt (3) stromaufwärts von einer Turbine (13) des Turboladers (8) erstreckt und die Abgas-Rezirkulationssteuermittel (26) einen Ventilhub des Abgas-Rezirkulationsventils (5) regeln bzw. steuern, um das tatsächliche Überschußluftverhältnis in Übereinstimmung mit dem Ziel-Überschußluftverhältnis zu bringen.

## Revendications

1. Système de commande pour un moteur turbocompressé (1) équipé d'un moyen de commande de remise en circulation des gaz d'échappement (26) pour détecter une valeur relative à un niveau d'air excédentaire réel et pour commander en retour un clapet de remise en circulation des gaz d'échappement (5) afin de faire coïncider ledit niveau d'air excédentaire réel avec un niveau d'air excédentaire de consigne, et un moyen de commande de rendement de turbine (28) pour commander un turbocompresseur (8) afin de changer le rendement de turbine dudit turbocompresseur, **caractérisé par** :
un moyen de détection (12) pour détecter une valeur relative à une différence de pression entre la pression en amont et la pression en aval dudit clapet de remise en circulation des gaz d'échappement (5), et un moyen de commande (26, 37) pour commander ledit moyen de commande de rendement de turbine (28) afin de modifier une vitesse de changement à laquelle ledit rendement de turbine change de telle sorte que celui-ci diminue lorsque ladite différence de pression augmente.

2. Système de commande pour un moteur turbocompressé selon la revendication 1, dans lequel ledit moyen (28) de commande de rendement de turbine change ledit rendement de turbine en changeant un angle de buse d'une buse de turbine, de laquelle dépend une aire d'écoulement des gaz d'échappement d'une turbine (13) dudit turbocompresseur (8), de telle sorte qu'une vitesse de changement à laquelle ledit angle de buse change diminue lorsque ladite différence de pression augmente.

3. Système de commande pour un moteur turbocompressé selon la revendication 1 ou 2, dans lequel ledit moyen (28) de commande de rendement de turbine comprend un limiteur de pression de suralimentation qui est disposé dans un passage à travers lequel les gaz d'échappement s'écoulent en contournant la turbine (13) dudit turbocompresseur (8), et commande le fonctionnement dudit limiteur de pression de suralimentation afin de changer ledit rendement de turbine de ladite turbine (13) de telle sorte qu'une vitesse de changement à laquelle fonctionne ledit limiteur de pression de suralimentation diminue lorsque ladite différence de pression augmente.

4. Système de commande pour un moteur turbocompressé selon l'une quelconque des revendications 1 à 3, dans lequel ledit moyen de détection (12) comprend un capteur de pression (12) efficace pour détecter la pression d'air d'admission de l'air d'admission introduit dans un passage d'admission (2) comme ladite valeur relative à ladite différence de pression entre la pression en amont et la pression en aval dudit clapet de remise en circulation des gaz d'échappement (5), et ledit moyen (28) de commande de rendement de turbine commande ledit turbocompresseur (8) afin de changer ledit rendement de turbine à une vitesse de changement qui diminue lorsque ladite pression d'air d'admission augmente.

5. Système de commande pour un moteur turbocompressé selon l'une quelconque des revendications 1 à 4, dans lequel ledit moyen (28) de commande de rendement de turbine commande ledit turbocompresseur (8) afin de changer ledit rendement de turbine à une vitesse de changement qui diminue lorsque ledit moteur turbocompressé (1) fonctionne à des régimes élevés et des charges élevées.

6. Système de commande pour un moteur turbocompressé selon l'une quelconque des revendications 1 à 5, dans lequel ledit moyen (28) de commande de rendement de turbine commande ledit turbocompresseur (8) afin de changer un angle de buse d'une buse de turbine, de laquelle dépend une aire d'écoulement des gaz d'échappement d'une turbine (13) dudit turbocompresseur (8), afin de changer le rendement de turbine dudit turbocompresseur, ledit moyen de détection (12) détecte la pression d'air d'admission de l'air d'admission introduit dans un passage d'admission (2) comme une valeur relative à une différence de pression entre la pression en amont et la pression en aval dudit clapet de remise en circulation des gaz d'échappement (5), et ledit moyen de commande (26) commande une vitesse de changement à laquelle ledit clapet de remise en circulation des gaz d'échappement (5) est actionné de façon à la réduire et une vitesse de changement dudit niveau d'air excédentaire réel de façon à l'augmenter lors de l'actionnement dudit clapet de remise en circulation des gaz d'échappement (5) plutôt que lors d'un changement dudit angle de buse.

7. Système de commande pour un moteur turbocompressé selon l'une quelconque des revendications 1 à 6, dans lequel ledit moyen (28) de commande de rendement de turbine modifie une vitesse de changement à laquelle ledit rendement de turbine change de manière à ce qu'il soit élevée à la période de début d'accélération à partir d'un état dans lequel ledit moteur turbocompressé fonctionne dans une plage de régimes plus bas et de charges plus basses.

8. Système de commande pour un moteur turbocompressé selon la revendication 7, dans lequel ledit moyen (28) de commande de rendement de turbine modifie la vitesse de changement de manière à ce qu'il soit élevé lors d'une étape initiale d'accélération puisqu'une pédale d'accélérateur est dans sa position complètement relâchée.

9. Système de commande pour un moteur turbocompressé selon l'une quelconque des revendications 1 à 8, dans lequel un passage de remise en circulation des gaz d'échappement (4) s'étend depuis un passage d'échappement (3) situé en amont d'une turbine (13) dudit turbocompresseur (8), et ledit moyen de commande de remise en circulation des gaz d'échappement (26) commande en retour un soulèvement de clapet dudit clapet de remise en circulation des gaz d'échappement (5) afin de faire coïncider ledit niveau d'air excédentaire réel avec ledit niveau de consigne d'air excédentaire.
